# EUROPÄISCHE PATENTSCHRIFT

(11) **EP 0 856 068 B1**
(45) Veröffentlichungstag und Bekanntmachung des Hinweises auf die Patenterteilung: **24.11.1999**
(21) Anmeldenummer: 96932378.1
(22) Anmeldetag: 15.10.1996
(51) Int. Cl.: C21B 5/00, B65G 53/52, B65G 53/56

(54) **VERFAHREN ZUM FÖRDERN EINES FEINTEILIGEN FESTSTOFFES**
PROCESS FOR CONVEYING A FINELY DIVIDED SOLID
PROCEDE POUR TRANSPORTER UNE MATIERE SOLIDE A PARTICULES FINES

(30) Priorität: 19.10.1995 AT 174595
(43) Veröffentlichungstag der Anmeldung: 05.08.1998
(73) Patentinhaber: Voest Alpine Industrieanlagenbau Gmbh, 4020 Linz (AT)
(72) Erfinder: SCHENK, Johannes, A-4040 Linz (AT); NAGL, Michael, A-4204 Reichenau (AT); KASTNER, Walter-Rainer, A-4180 Zwettl (AT)
(74) Vertreter: Rieberer, Stefan, Dipl.-Ing.
(86) Internationale Anmeldenummer: AT9600196
(87) Internationale Veröffentlichungsnummer: WO9714817

(56) Entgegenhaltungen:
- DE-A- 3 803 576
- PATENT ABSTRACTS OF JAPAN vol. 9, no. 245 (M-418), 2.November 1983 & JP 60 097121 A (SUMITOMO KINZOKU KOGYO), 30.Mai 1985,
- PATENT ABSTRACTS OF JAPAN vol. 18, no. 517 (C-1254), 29.September 1994 & JP 06 172838 A (KOBE STEEL), 21.Juni 1994,
- PATENT ABSTRACTS OF JAPAN vol. 13, no. 208 (C-596), 16.Mai 1989 & JP 01 025911 A (NAKAYAMA SEIKOSHO), 27.Januar 1989,

## Beschreibung

Die Erfindung betrifft ein Verfahren zum kontinuierlichen Fördern eines feinteiligen und/oder staubförmigen Feststoffes mittels eines Fördermediums zu zwei oder mehreren Ziel-Stellen, wobei der Feststoff in ein Verteilergefäß eingebracht wird und von diesem mittels des Fördermediums über jeweils eine Versorgungsleitung zu jeweils einer Ziel-Stelle in einer gewünschten Ziel-Menge/Zeiteinheit gefördert wird, sowie eine Einrichtung zur Durchführung des Verfahrens.

Es ist bekannt (DE-A - 26 46 130, DE-C - 30 50 394 und DE-A - 25 37 370), feinteilige bis staubförmige Feststoffe mittels Druckluft von einem Verteilergefäß aus zu mehreren Ziel-Stellen zu fördern, insbesondere Kohlenstaub zu mehreren Verbraucherstellen, wie Windformen eines Hochofens. Hierbei kommt insbesondere die Dichtstromförderung zur Anwendung, wobei der Kohlestaub zunächst pneumatisch in ein Verteilergefäß in jener Menge/Zeiteinheit eingebracht wird, in der der Kohlestaub von diesem Gefäß wieder weitergeleitet wird. Von dem Verteilergefäß führen mehrere Versorgungsleitungen zu den Ziel-Stellen, d.h. den Windformen des Hochofens, wobei jede Windform mit einem durch eine eigene Versorgungsleitung geförderten Materialstrom beaufschlagt wird.

Es hat sich gezeigt, daß die Aufteilung des Kohlestaubs in dem als statischer Verteiler fungierenden Verteilergefäß auf die einzelnen Versorgungsleitungen mit einer relativ hohen Genauigkeit (±5 % der gewünschten Ziel-Menge/Zeiteinheit) erfolgt. Eine Einstellung der zu den Ziel-Stellen geförderten Ziel-Menge/Zeiteinheit läßt sich beispielsweise in einfacher Weise durch Einstellung der Druckdifferenz zwischen dem Druck an der Ziel-Stelle und dem Druck im Inneren des Verteilergefäßes erreichen.

Ist es notwendig, für die gemeinsam von einem Verteilergefäß versorgten Ziel-Stellen die Ziel-Menge/Zeiteinheit des Feststoffes individuell einzustellen bzw. zu regeln, ergeben sich große Schwierigkeiten. Es wäre dann notwendig, in jede Versorgungsleitung Regelarmaturen, wie Klappen, Ventile od. dgl., die eine Mengeneinstellung erlauben, sowie Massendurchflußmesser einzusetzen. Hier ist man jedoch in der Praxis auf unüberwindliche Schwierigkeiten gestoßen, da derartige Regelarmaturen und Massendurchflußmesser bei der Förderung von feinteiligen bzw. staubförmigen Feststoffen einem enorm hohen Verschleiß unterliegen. Ein Versagen einer der Regelarmaturen bewirkt auch bei den übrigen Ziel-Stellen Unregelmäßigkeiten. Der Austausch einer Regelarmatur ist aufwendig, da die Förderung unterbrochen werden muß.

Die Erfindung bezweckt die Vermeidung dieser Nachteile und Schwierigkeiten und stellt sich die Aufgabe, ein Verfahren zum Fördern eines feinteiligen Feststoffes der eingangs beschriebenen Art zu schaffen, mit dem in einfacher Weise die von einem Verteilergefäß gemeinsam versorgten Ziel-Stellen auch mit individuell unterschiedlich einstellbaren Ziel-Mengen/Zeiteinheit an feinteiligen bzw. staubförmigen Feststoffen versorgt werden können. Das Verfahren soll insbesondere kostengünstig verwirklichbar sein und die hierzu dienende Einrichtung wenig störanfällig sein und sich durch eine hohe Lebensdauer auszeichnen.

Diese Aufgabe wird erfindungsgemäß dadurch gelöst, daß die jeweils einer Ziel-Stelle zugedachte Ziel-Menge/Zeiteinheit in zwei oder mehrere Ziel-Teilmengen/Zeiteinheit geteilt und jeweils eine Ziel-Teilmenge/Zeiteinheit über eine eigene Teil-Versorgungsleitung vom Verteilergefäß mittels des Fördermediums abgeleitet wird, die Ziel-Teilmengen/Zeiteinheit spätestens bei der jeweiligen Ziel-Stelle zusammengeleitet werden und daß zwecks Einstellung der Ziel-Menge/Zeiteinheit einer Ziel-Stelle in einer bestimmten Höhe Teil-Versorgungsleitungen, die zu dieser Ziel-Stelle leiten, wahlweise abgesperrt oder offen gehalten werden.

Die einer Ziel-Stelle zugedachte Ziel-Menge/Zeiteinheit läßt sich so auf einfache Weise durch Summenbildung der Ziel-Teilmengen/Zeiteinheit, die zu dieser Ziel-Stelle über die Teil-Versorgungsleitungen zugeführt werden, einstellen, wobei eine oder mehrere der Teil-Versorgungsleitungen, die zu dieser Ziel-Stelle führen, je nach gewünschter, dieser Ziel-Stelle zugedachten Ziel-Menge/Zeiteinheit offen gehalten oder abgesperrt werden. Dies ist insoferne einfach zu realisieren, als lediglich Ventile mit Auf-Zu-Funktion in den Teil-Versorgungsleitungen vorgesehen werden müssen, die praktisch keinem größeren Verschleiß unterliegen als die anderen zur Durchführung des Verfahrens notwendigen Einrichtungsteile. Spezielle Regelventile und Durchflußmesser können entfallen.

Es ist zweckmäßig, die einer Ziel-Stelle zugedachten Ziel-Teilmengen/ Zeiteinheit gleich groß zu wählen, wodurch sich eine besonders gleichmäßige und störungsfreie Aufteilung der Ziel-Teilmengen/Zeiteinheit im Verteilergefäß ergibt.

Um die einer Ziel-Stelle zugedachte Ziel-Menge/Zeiteinheit nicht nur in gleich großen Mengenstufen abstufen zu können, wird (werden) gemäß einer bevorzugten Ausführungsform eine oder mehrere einer Ziel-Stelle zugedachte(n) Ziel-Teilmenge(n)/Zeiteinheit ungleich groß zu den anderen Ziel-Teilmengen/Zeiteinheit gewählt.

Das erfindungsgemäße Verfahren läßt sich mit besonderem Vorteil verwirklichen, wenn als Fördermedium ein Druckgas eingesetzt wird. Es ist jedoch auch einsetzbar, wenn als Fördermedium eine Flüssigkeit zur Anwendung gelangt.

Will man bei einer Ziel-Stelle die Ziel-Menge/Zeiteinheit ändern und bei der oder den anderen Ziel-Stellen die Ziel-Mengen/Zeiteinheit völlig konstant halten, wird vorzugsweise bei Änderung der einer Ziel-Stelle zugedachten Ziel-Menge/Zeiteinheit zusätzlich die in das Verteilergefäß eingebrachte Menge/Zeiteinheit geändert.

Eine Einrichtung zur Durchführung des Verfahrens ist gekennzeichnet durch die Kombination folgender Merkmale:
- ein Verteilergefäß, in das eine Zuführungsleitung für den zu fördernden feinteiligen Feststoff und für ein Fördermedium mündet,
- zwei oder mehrere Ziel-Stellen, zu denen feinteiliger Feststoff gefördert werden soll,
- mindestens zwei vom Verteilergefäß ausgehende und zu jeweils einer Ziel-Stelle führende Teil-Versorgungsleitungen und
- in jeder der Teil-Versorgungsleitungen jeweils ein Absperrventil, das in eine Auf- oder Zu-Stellung bringbar ist.

Eine konstruktiv einfache und kostengünstige Ausführungsform ist dadurch gekennzeichnet, daß die Absperrventile in der Nähe des Verteilergefäßes angeordnet sind und die zu jeweils einer Ziel-Stelle führenden Teil-Versorgungsleitungen in Strömungsrichtung nach den Absperrventilen in eine zu dieser Ziel-Stelle führende Versorgungs-Sammelleitung münden.

Vorteilhaft weisen die Querschnitte der Teil-Versorgungsleitungen, die zu einer der Ziel-Stellen führen, jeweils gleich große Querschnitte auf.

Eine bevorzugte Ausführungsform, die eine feinere Abstufung der für eine Ziel-Stelle zugedachten Ziel-Mengen/Zeiteinheit gestattet, ist dadurch gekennzeichnet, daß die Teil-Versorgungsleitungen, die zu einer der Ziel-Stellen führen, unterschiedlich große Querschnitte aufweisen.

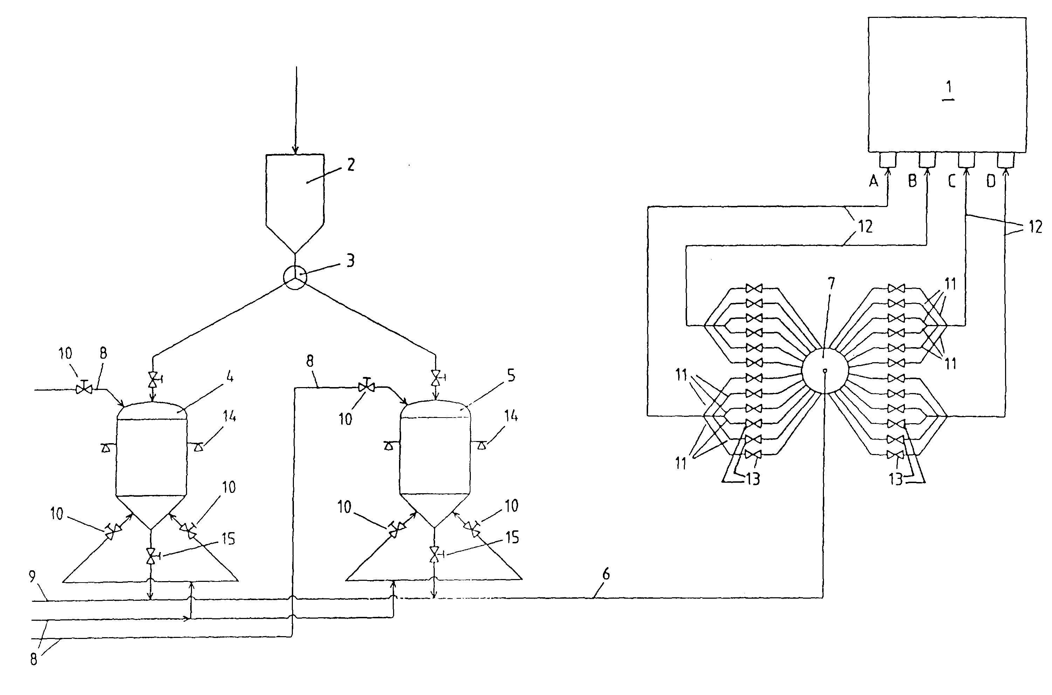

Die Erfindung ist nachstehend anhand eines in der Zeichnung schematisch dargestellten Ausführungsbeispieles näher erläutert.

Eine metallurgische Anlage 1, beispielsweise ein Schmelzgefäß, wie ein Hochofen etc., wird mit einem feinteiligen Feststoff, beispielsweise staubförmiger Kohle, staubförmigen Zuschlagstoffen, Eisenerz, Eisenschwamm etc., versorgt, wobei die feinteiligen Feststoffe an vier Ziel-Stellen A, B, C, D in die metallurgische Anlage 1 eingeleitet werden sollen.

Die feinteiligen Feststoffe werden zunächst aus einem Vorratsbunker 2 mit einem mechanischen Feststoffördermittel 3, wie z.B. einer Zellradschleuse, in zwei Sendegefäße 4,5 gefüllt, u.zw. alternierend. Während der Befüllung des einen Sendegefäßes wird das zweite Sendegefäß mit einem Fördermedium, wie Fluidisierungsgas, beaufschlagt bzw. bespannt, wodurch die Feststoffe aus diesem Sendegefäß über eine Förderleitung 6 zu einem als statischer Verteiler arbeitenden Verteilergefäß 7 gefördert werden. Das Fördermedium wird über Leitungen 8 den Sendegefäßen 4, 5 zugeführt und über die Leitung 9 in die Förderleitung 6 eingespeist. Als Ventile ausgebildete Regelarmaturen 10 ermöglichen nicht nur das alternierende Beaufschlagen der Sendegefäße 4, 5, sondern auch die Einstellung der über die Leitungen 8 geförderten Mengen/Zeiteinheit des Fördermediums. Die Regelarmaturen 10 dienen sowohl zur Einstellung der Menge des Fördermediums, das über die Leitungen 8 den Sendegefäßen 4 und 5 oben zugeführt wird, als auch zur Einstellung der Menge des Fördermediums, das zur Feststofffluidisierung den Sendegefäßen 4 und 5 unten zugeführt wird.

Erfindungsgemäß wird die jeder Ziel-Stelle A bis D zugedachte Ziel-Mengen/ Zeiteinheit zunächst in Ziel-Teilmengen/Zeiteinheit aufgeteilt, wobei jede Ziel-Teilmenge/Zeiteinheit über eine eigene Teil-Versorgungsleitung 11 aus dem Verteilergefäß 7 ausgefördert wird. Es sind gemäß dem dargestellten Ausführungsbeispiel jeweils sechs Teil-Versorgungsleitungen 11 einer Ziel-Stelle A bis D zugedacht. Die zu einer Ziel-Stelle A bis D führenden Teil-Versorgungsleitungen 11 münden in eine zur zugehörigen Ziel-Stelle A bis D führende Versorgungs-Sammelleitung 12. Jede der Teil-Versorgungsleitungen 11 ist mit einem Absperrventil 13 ausgestattet, das lediglich in eine Auf- oder Zustellung brinbar sein muß.

Die Einstellung der der metallurgischen Anlage 1 zugeführten Gesamtmenge/ Zeiteinheit an Feststoffen erfolgt mit einer Ventile 15 aufweisenden Regelarmatur am Auslauf jedes Sendegefäßes 4, 5 und durch Wägung des Sendegefäßes mit Hilfe deren Wägeeinrichtungen 14. Statt einer Regelarmatur mit Ventilen 15 können hier auch andere Einrichtungen, wie z.B. eine Zellradschleuse, vorgesehen sein. Während des Umschaltens von einem Sendegefäß 4 auf das andere Sendegefäß 5 bleibt die dem Verteilergefäß 7 zugeführte Menge/Zeiteinheit an Feststoffen praktisch konstant.

Soll die einer Ziel-Stelle A bis D zugedachte Ziel-Menge/Zeiteinheit reduziert werden, wird erfindungsgemäß eine oder werden erfindungsgemäß zwei oder mehrere der dieser Ziel-Stelle A bis D zugedachten Teil-Versorgungsleitungen 11 durch Betätigen des entsprechenden Absperrventiles 13 abgesperrt. Falls die Ziel-Menge/Zeiteinheit an einer Ziel-Stelle A bis D erhöht werden soll, kann dies durch Absperren von einzelnen Teil-Versorgungsleitungen 11 der anderen Ziel-Stellen A bis D erreicht werden, wodurch die Aufteilung der dem Verteilergefäß 7 zugeführten Gesamtmenge/Zeiteinheit der Feststoffe verändert wird.

Bei zum Verteilergefäß 7 konstant zugeführter Gesamtmenge/Zeiteinheit feinteiligen Feststoffes kommt es bei einem Reduzieren der einer Ziel-Stelle A bis D zugeleiteten Ziel-Menge/Zeiteinheit zu einer Erhöhung der Ziel-Menge/Zeiteinheit, die den übrigen von dem Verteilergefäß 7 versorgten Ziel-Stellen A bis D zugeleitet werden, wobei die Menge/Zeiteinheit, um die die Ziel-Menge/Zeiteinheit der einen Ziel-Stelle reduziert wurde, sich auf die restlichen Ziel-Stellen aufteilt. Will man eine solche Erhöhung an den restlichen Ziel-Stellen vermeiden, braucht man erfindungsgemäß lediglich die dem Verteilergefäß 7 zugeführte Gesamtmenge/Zeiteinheit entsprechend zu reduzieren.

Für eine Erhöhung der einer Ziel-Stelle zugeführten Ziel-Menge/Zeiteinheit ist bei völliger Konstanthaltung der den übrigen Ziel-Stellen zugeführten Ziel-Mengen/Zeiteinheit umgekehrt die dem Verteilergefäß 7 zugeführte Gesamtmenge/Zeiteinheit zu erhöhen. Da dies zu einer Erhöhung an allen Ziel-Stellen führen würde, muß bei den übrigen Ziel-Stellen der Materialfluß verringert werden, u.zw. durch Abschalten einer oder mehrerer der Teil-Versorgungsleitungen 11, die zu den übrigen Ziel-Stellen führen.

Erfindungsgemäß wird zwar nicht die Ziel-Menge/Zeiteinheit stufenlos eingestellt, aber es gelingt durch entsprechendes Zu- und Wegschalten, also Öffnen und Schließen der Absperrventile 13 einzelner Teil-Versorgungsleitungen 11 eine befriedigende Lösung des Regelproblems für viele technische Anwendungen. Die Einstellung der Ziel-Menge/Zeiteinheit kann umso genauer erfolgen, je mehr Teil-Versorgungsleitungen 11 einer Ziel-Stelle A bis D zugedacht sind, d.h. je feiner die Ziel-Menge/Zeiteinheit in Ziel-Teilmengen/Zeiteinheit aufgeteilt bzw. aufgefächert wird.

Der besondere Vorteil der Erfindung ist darin zu sehen, daß lediglich Absperrarmaturen 13 mit einer Auf-Zu-Funktion in den Teil-Versorgungsleitungen 11 erforderlich sind, die einem wesentlich geringeren Verschleiß als Regelventile, die eine Mengendosierung erlauben, unterliegen. Vorzugsweise werden Absperrarmaturen 13 eingesetzt, die beim Öffnen den vollen Rohrquerschnitt freigeben und keine Materialumlenkung aufweisen, wie z.B. ein Kugelhahn oder ein Schieber, um die Absperrarmaturen 13 vor Verschleiß zu schützen.

Zudem kann aufgrund der guten Verteilungsgenauigkeit des Verteilergefäßes 7 für viele Förderaufgaben auf eine Massendurchflußmessung der Ziel-Teilmengen/Zeiteinheit verzichtet werden.

Die Erfindung läßt sich für die Förderung unterschiedlichster feinteiliger Feststoffe bzw. Schüttgüter anwenden, also nicht lediglich im metallurgischen Bereich, sondern auch in ganz anderen Technologiebereichen, wie z.B. in der Zementindustrie, bei kalorischen Kraftwerken, Mühlen, Zuckerfabriken etc.

In der Kraftwerkstechnik ist die Erfindung z.B. zur Förderung von Kohlestaub oder von Schlämmen (z.B. mechanisch entwässertem Klärschlamm oder Kohleschlamm) zu den Brennern eines Kessels sowie zur Zugabe von Additiven (z.B. Kalkstein oder Dolomit) ins Rauchgas zur Bindung von Schwefelstoffen (z.B. Schwefel) anwendbar.

Für eine Kohlevergasung kann die Erfindung zur Förderung und Verteilung von Kohlestaub zum Kohlevergaser mit mehreren Einspeisstellen dienen.

In der Zementindustrie ist die Erfindung z.B. zur Förderung und Verteilung von Kalksteinmehl zur Vorkalzinierstufe mit Vorteil einsetzbar.

## Patentansprüche

1. Verfahren zum kontinuierlichen Fördern eines feinteiligen und/oder staubförmigen Feststoffes mittels eines Fördermediums zu zwei oder mehreren Ziel-Stellen (A bis D), wobei der Feststoff in ein Verteilergefäß (7) eingebracht wird und von diesem mittels des Fördermediums über jeweils eine Versorgungsleitung (12) zu jeweils einer Ziel-Stelle (A bis D) in einer gewünschten Ziel-Menge/Zeiteinheit gefördert wird, dadurch gekennzeichnet, daß die jeweils einer Ziel-Stelle (A bis D) zugedachte Ziel-Menge/Zeiteinheit in zwei oder mehrere Ziel-Teilmengen/Zeiteinheit geteilt und jeweils eine Ziel-Teilmenge/Zeiteinheit über eine eigene Teil-Versorgungsleitung (11) vom Verteilergefäß (7) mittels des Fördermediums abgeleitet wird, die Ziel-Teilmengen/Zeiteinheit spätestens bei der jeweiligen Ziel-Stelle (A bis D) zusammengeleitet werden und daß zwecks Einstellung der Ziel-Menge/Zeiteinheit einer Ziel-Stelle (A bis D) in einer bestimmten Höhe Teil-Versorgungsleitungen (11), die zu dieser Ziel-Stelle (A bis D) leiten, wahlweise abgesperrt oder offen gehalten werden.

2. Verfahren nach Anspruch 1, dadurch gekennzeichnet, daß die einer Ziel-Stelle (A bis D) zugedachten Ziel-Teilmengen/Zeiteinheit gleich groß gewählt werden.

3. Verfahren nach Anspruch 1, dadurch gekennzeichnet, daß eine oder mehrere einer Ziel-Stelle (A bis D) zugedachte(n) Ziel-Teilmenge(n)/Zeiteinheit ungleich groß zu den anderen Ziel-Teilmengen/Zeiteinheit gewählt wird (werden).

4. Verfahren nach einem oder mehreren der Ansprüche 1 bis 3, dadurch gekennzeichnet, daß als Fördermedium ein Druckgas eingesetzt wird.

5. Verfahren nach einem oder mehreren der Ansprüche 1 bis 4, dadurch gekennzeichnet, daß bei Änderung der einer Ziel-Stelle (A bis D) zugedachten Ziel-Menge/Zeiteinheit zusätzlich die in das Verteilergefäß (7) eingebrachte Menge/Zeiteinheit geändert wird.

6. Einrichtung zur Durchführung des Verfahrens nach einem oder mehreren der Ansprüche 1 bis 5, gekennzeichnet durch die Kombination folgender Merkmale:
- ein Verteilergefäß (7), in das eine Zuführungsleitung (6) für den zu fördernden feinteiligen Feststoff und für ein Fördermedium mündet,
- zwei oder mehrere Ziel-Stellen (A bis D), zu denen der feinteilige Feststoff gefördert werden soll,
- mindestens zwei vom Verteilergefäß (7) ausgehende und zu jeweils einer Ziel-Stelle (A bis D) führende Teil-Versorgungsleitungen (11) und
- in jeder der Teil-Versorgungsleitungen (11) jeweils ein Absperrventil (13), das in eine Auf- oder Zu-Stellung bringbar ist.

7. Einrichtung nach Anspruch 6, dadurch gekennzeichnet, daß die Absperrventile (13) in der Nähe des Verteilergefäßes (7) angeordnet sind und die zu jeweils einer Ziel-Stelle (A bis D) führenden Teil-Versorgungsleitungen (11) in Strömungsrichtung nach den Absperrventilen (13) in eine zu dieser Ziel-Stelle (A bis D) führende Versorgungs-Sammelleitung (12) münden.

8. Einrichtung nach Anspruch 6 oder 7, dadurch gekennzeichnet, daß die Querschnitte der Teil-Versorgungsleitungen (11), die zu einer der Ziel-Stellen (A bis D) führen, jeweils gleich große Querschnitte aufweisen.

9. Einrichtung nach Anspruch 6 oder 7, dadurch gekennzeichnet, daß die Teil-Versorgungsleitungen (11), die zu einer der Ziel-Stellen (A bis D) führen, unterschiedlich große Querschnitte aufweisen.

## Claims

1. Process for the continuous conveying of a fine-grained andlor pulverized solid by means of a conveying medium to two or several target points (A to D), where the solid is charged into a distribution vessel (7) and from there conveyed to one target point (A to D) each by means of the conveying medium in a desired target flow rate / unit of time, characterized in that the target flow rate/unit of time intended for one target point (A to D) each is divided into two or several partial target flow rates / unit of time and one partial target flow rate/ unit of time each is diverted via a separate partial supply line (11) from the distribution vessel (7) by means of the conveying medium, the partial target flow rates / unit of time are reunited at the respective target point (A to D) at the latest and that, in order to adjust the target flow rate / unit of time at a target point (A to D) at a specific level, partial supply lines (11) leading to this target point (A to D) are altematively kept shut-off or open.

2. Process as claimed in claim 1, characterized in that equally large volumes are selected for the partial target flow rates / unit of time intended for a target point (A to D).

3. Process as claimed in claim 1, characterized in that different volumes as compared to other partial target flow rates / unit of time are selected for one or several partial target flow rate(s) / unit of time intended for a target point (A to D).

4. Process as claimed in any or several of the claims 1 to 3, characterized in that a pressure gas is used as conveying medium.

5. Process as claimed In any or several of the claims 1 to 4, characterized in that in case of change of the target flow rate / unit of time intended for a target point (A to D) the flow rate / unit of time charged into the distribution vessel (7) is changed in addition.

6. Facility for the execution of the process as claimed in any or several of the claims 1 to 5, characterized by the combination of the following features:
• A distribution vessel (7), into which a supply line (6) for the fine-grained solid to be conveyed and for a conveying medium leads
• Two or several target points (A to D), to which the fine-grained solid is to be conveyed
• At least two partial supply lines (11) leading out of the distribution vessel (7) to one target point (A to D) each
• One shut-off valve (13) in each of the partial supply lines (11), which can be set to on or off-position

7. Facility as claimed in claim 6, characterized in that the shut-off valves (13) are located near the distribution vessel (7) and that the partial supply lines (11) leading to one target point (A to D) each lead into one supply main (12) leading to this target point (A to D) in flow direction downstream of the shut-off valves (13).

8. Facility as claimed in claims 6 or 7, characterized in that the partial supply lines (11) leading to one of the target points (A to D) have equally dimensioned cross sections.

9. Facility as claimed in claims 6 or 7, characterized in that the partial supply lines (11) leading to one of the target points (A to D) have differently dimensioned cross sections.

## Revendications

1. Procédé de transport continu d'un solide finement divisé et/ou se présentant sous forme de poussière, au moyen d'un milieu de transport, vers deux emplacements cibles (A à D) ou plus, le solide étant introduit dans un récipient distributeur (7) et de celui-ci étant transporté, au moyen du milieu de transport, chaque fois par une conduite d'alimentation (12) vers chaque fois un emplacement cible (A à D), en un rapport souhaité quantité cible/unité de temps, caractérisé en ce que le rapport quantité cible/unité de temps chaque fois affecté à un emplacement cible (A à D) est subdivisé en deux rapports, quantités partielles cibles/unité de temps, ou plus, et chaque fois une proportion quantité partielle cible/unité de temps étant évacuée par une conduite d'alimentation partielle (11) depuis le récipient distributeur (7) au moyen du milieu de transport, les proportions quantités partielles cibles/unité de temps étant regroupées au plus tard lors de l'emplacement cible (A à D) respectif, et en ce que, dans le but de régler le rapport quantité cible/unité de temps d'un emplacement cible (A à D) à une valeur déterminée, des conduites d'alimentations partielles (11), menant à cet emplacement cible (A à D) sont au choix maintenus fermées ou ouvertes.

2. Procédé selon la fabrication 1, caractérisé en ce que les rapports quantités partielles cibles/unité de temps affectés à un emplacement cible (A à D) sont choisis d'une valeur identique.

3. Procédé selon la revendication 1, caractérisé en ce qu'un ou plusieurs rapports quantités partielles cibles/unité de temps, affecté(s) à un emplacement cible (A à D), (est) sont choisis de valeur différente des autres rapports quantités partielles cibles/unité de temps.

4. Procédé selon l'une ou plusieurs des revendications 1 à 3, caractérisé en ce que l'on utilise comme milieu de transport un gaz sous pression.

5. Procédé selon l'une ou plusieurs des revendications 1 à 4, caractérisé en ce que, en cas de modification du rapport quantité cible/unité de temps affecté à un emplacement cible (A à D), on procède en plus à la modification du rapport quantité/unité de temps introduit dans le récipient distributeur (7).

6. Dispositif de mise en oeuvre du procédé selon l'une ou plusieurs des revendications 1 à 5, caractérisé par la combinaison des caractéristiques suivantes :
- un récipient distributeur (7), dans lequel débouche une conduite d'amenée (6) pour le solide finement divisé, à transporter, et pour un milieu de transport,
- deux emplacements cibles (A à D) ou plus, auxquels le solide finement divisé doit être transporté,
- au moins douze conduites d'alimentation partielle (11), partant du récipient distributeur (7) et menant chaque fois à un emplacement cible (A à D), et
- dans chacune des conduites d'alimentation partielle (11) chaque fois une soupape d'isolement (13), qui peut être placée en position ouverte ou fermée.

7. Dispositif selon la revendication 6, caractérisé en ce que les soupapes d'isolement (13) sont disposées à proximité du récipient distributeur (7) et les conduites d'alimentation partielle (11) menant chaque fois à un emplacement cible (A à D), débouchent, dans la direction d'écoulement, en aval des valves d'isolement (13), dans une conduite collectrice d'alimentation (12) menant à cet emplacement cible (A à D).

8. Dispositif selon la revendication 6 ou 7, caractérisé en ce les sections transversales des conduites d'alimentation partielles (11) qui mènent à l'un des emplacements cibles (A à D) ont chaque fois des sections transversales de même aire.

9. Dispositif selon les revendications 6 ou 7, caractérisé en ce que les conduites d'alimentation partielles (11) qui mènent à l'un des emplacements cibles (A à D) présentent des sections transversales d'aire différente.
